# EUROPEAN PATENT APPLICATION

(11) **EP 4 318 772 A1**
(43) Date of publication of application: **07.02.2024**
(21) Application number: 21966017.2
(22) Date of filing: 01.12.2021
(51) Int. Cl.: H01M 50/375

(54) **BATTERY CELL, BATTERY, ELECTRICAL APPARATUS AND MANUFACTURING METHOD AND APPARATUS FOR BATTERY CELL**

(71) Applicant: Contemporary Amperex Technology Co., Limited, Fujian PRC 352100 (CN)
(72) Inventor: SU, Huasheng, Ningde, Fujian 352100 (CN); LI, Quankun, Ningde, Fujian 352100 (CN); XING, Chengyou, Ningde, Fujian 352100 (CN); WANG, Peng, Ningde, Fujian 352100 (CN); JIN, Haizu, Ningde, Fujian 352100 (CN)
(74) Representative: Behr, Wolfgang
(86) International application number: PCT/CN2021/134885
(87) International publication number: WO 2023/097584

(57) **Abstract**

Embodiments of the present disclosure provide a battery cell, a battery, an electrical apparatus, and a method and apparatus for manufacturing the battery cell, and relate to the technical field of batteries. The battery cell includes a housing, an electrode assembly, a current collecting member and a pressure relief mechanism. The electrode assembly is configured for being accommodated in the housing. The end cover is configured for covering the opening of the housing. The current collecting member is configured for connecting the electrode assembly and the end cover. The pressure relief mechanism is arranged on the end cover. A side of the end cover facing away from the electrode assembly is provided with a concave, the concave is configured for accommodating at least a portion of the pressure relief mechanism, a connecting part is formed on the end cover in an area where the concave is provided, the connecting part is configured for being welded to the current collecting member to form a first welded part, and the pressure relief mechanism covers the first welded part along a thickness direction of the end cover. The size of the pressure relief mechanism in the direction perpendicular to the thickness direction of the end cover is not limited by the first welded part, so that the sizes of the concave and the pressure relief mechanism can be enlarged as required, which is beneficial to improve the pressure relief capacity of the pressure relief mechanism and the safety of the battery cell.

## Description

### Technical Field

The present disclosure relates to the technical field of batteries, in particular to a battery cell, a battery, an electrical apparatus, and a method and apparatus for manufacturing a battery cell.

### Background Art

Energy saving and emission reduction is the key to the sustainable development of automobile industry, and electric vehicles have become an important part of the sustainable development of automobile industry because of their advantages of energy saving and environmental protection. Battery technology is an important factor for the development of electric vehicles.

In battery technology, it is necessary to consider both the performance and the safety of battery. Therefore, how to improve the safety of battery is an urgent problem in battery technology.

### Summary

Embodiments of the present disclosure provides a battery cell, a battery, an electrical apparatus, and a method and apparatus for manufacturing the battery cell, which can effectively improve the safety of the battery cell.

In a first aspect, an embodiment of the present disclosure provides a battery cell, which includes: a housing, provided with an opening; an electrode assembly, configured for being accommodated in the housing; an end cover, configured for covering the opening; a current collecting member, located at one side of the electrode assembly facing the end cover, wherein the current collecting member is configured for connecting the electrode assembly and the end cover, so as to realize an electrical connection between the electrode assembly and the end cover; and a pressure relief mechanism, arranged on the end cover, wherein the pressure relief mechanism is configured to be actuated when a pressure or a temperature inside the battery cell reaches a threshold value, so as to relieve the pressure inside the battery cell, wherein one side of the end cover facing away from the electrode assembly is provided with a concave, the concave is configured for accommodating at least a portion of the pressure relief mechanism, a connecting part is formed on the end cover in an area where the concave is provided, the connecting part is configured for being welded to the current collecting member to form a first welded part, and the pressure relief mechanism covers the first welded part along a thickness direction of the end cover.

In the above technical solution, at least a portion of the pressure relief mechanism is accommodated in the concave of the end cover, so that the space outside the battery cell occupied by the pressure relief mechanism is reduced, and the overall volume of the battery cell is smaller. Since the connecting part is formed on the end cover in the area where the concave is provided, the connecting part is welded to the current collecting member to form the first welded part, and the pressure relief mechanism covers the first welded part along the thickness direction of the end cover, so that the pressure relief mechanism and the first welded part are distributed in the thickness direction of the end cover. The size of the pressure relief mechanism in the direction perpendicular to the thickness direction of the end cover is not limited by the first welded part, so that the sizes of the concave and the pressure relief mechanism can be enlarged as required, which is beneficial to improve the pressure relief capacity of the pressure relief mechanism and the safety of the battery cell.

In some embodiments, the pressure relief mechanism is welded to the end cover to form a second welded part, and projection of the second welded part does not overlap with projection of the first welded part along the thickness direction.

In the above technical solution, the pressure relief mechanism is welded to the end cover to form the second welded part, which functions as connecting the pressure relief mechanism and the end cover, thus improving the firmness of the pressure relief mechanism after being arranged on the end cover. Since the projection of the second welded part along the thickness direction of the end cover does not overlap with the projection of the first welded part along the thickness direction of the end cover, in the process of welding the pressure relief mechanism and the end cover to form the second welded part, the second welded part will not be formed at the position where the first welded part is located, so as to avoid damage to the first welded part due to secondary welding, and ensure the firmness of the connecting part and the current collecting member after welding.

In some embodiments, both the first welded part and the second welded part extend along a circumferential direction of the end cover, and the second welded part is located at an outer peripheral side of the first welded part.

In the above technical solution, the second welded part is located at the outer peripheral side of the first welded part, so that the projection of the second welded part along the thickness direction of the end cover does not overlap with the projection of the first welded part along the thickness direction of the end cover, and the size of the second welded part in the circumferential direction of the end cover is larger, so that the firmness after welding the pressure relief mechanism and the end cover is improved.

In some embodiments, second welded parts and first welded parts are alternately arranged along a circumferential direction of the end cover.

In the above technical solution, the second welded parts and the first welded parts are alternately arranged along the circumferential direction of the end cover, so that the projection of the second welded part along the thickness direction of the end cover and the projection of the first welded part along the thickness direction of the end cover do not overlap.

In some embodiments, one side of the pressure relief mechanism facing the connecting part is formed with an avoidance groove for avoiding the first welded part.

In the above technical solution, the pressure relief mechanism is formed with the avoidance groove, the avoidance groove functions in avoiding the first welded part, and is beneficial to enable the pressure relief mechanism to abut against the connecting part, so that the pressure relief mechanism is more stable in the welding process with the end cover, and the welding quality between the pressure relief mechanism and the end cover is improved.

In some embodiments, the pressure relief mechanism includes a base, configured for being welded to the end cover to form a second welded part; and a pressure relief part, configured to be actuated when the pressure or the temperature inside the battery cell reaches a threshold value, so as to relieve the pressure inside the battery cell, wherein the pressure relief part is connected to an inner peripheral surface of the base, the pressure relief part covers the first welded part along the thickness direction, and the pressure relief part and the base jointly define the avoidance groove.

In the above technical solution, the pressure relief part of the pressure relief mechanism is configured for relieving the pressure inside the battery cell, the base of the pressure relief mechanism is configured for being welded and fixed to the end cover, and the pressure relief part and the base jointly define the avoidance groove for avoiding the first welded part, so that the pressure relief part for relieving pressure is formed correspondingly in the area where the pressure relief mechanism is formed with the avoidance groove, and the structure is simple.

In some embodiments, a thickness of the pressure relief part is smaller than a thickness of the base.

In the above technical solution, the thickness of the pressure relief part is smaller than the thickness of the base, so that the pressure relief mechanism is weaker in the area of the pressure relief part, which is convenient for relieving the pressure inside the battery cell.

In some embodiments, the base is welded to the connecting part to form the second welded part, or an outer peripheral surface of the base is welded to an inner peripheral surface of the concave to form the second welded part.

In the above technical solution, the base is welded to the connecting part to form the second welded part, the base and the connecting part may be welded together by means of keyhole welding, and the second welded part passes through the base and is combined with the connecting part, so that the pressure relief mechanism has good firmness after being welded to the end cover.

The outer peripheral surface of the base is welded to the inner peripheral surface of the concave to form a second welded part, and the pressure relief mechanism may be welded to the end cover by means of seam welding, so that the welding is simple, and the welding efficiency is high. In addition, the second welded part formed by welding the outer peripheral surface of the base and the inner peripheral surface of the concave is far away from the pressure relief part, thus reducing the risk of damage to the pressure relief part during welding.

In some embodiments, the end cover includes a cover body, configured for being connected to the housing, wherein the cover body has an outer surface and an inner surface which are oppositely arranged along the thickness direction, the inner surface faces the current collecting member, and the concave is concave from the outer surface in a direction facing the current collecting member; and a convex, convexly arranged on the inner surface and located at a position of the cover body corresponding to the concave, wherein the convex is provided with an abutting surface for abutting against the current collecting member, and a portion of the end cover located between the abutting surface and a bottom surface of the concave is the connecting part.

In the above technical solution, the convex is located at the position corresponding to the concave of the cover body and convexly arranged on the inner surface of the cover body, and the convex can reinforce the position where the cover body is provided with the concave, so that the concave can be concave as deep as possible in the direction facing the current collecting member, which is beneficial to increase the concave depth of the concave. In addition, the convex is convexly arranged on the inner surface of the cover body, so that the flatness of the abutting surface of the convex can be ensured more easily, thus the convex can keep good contact with the current collecting member, and the flow area between the current collecting member and the end cover can be ensured.

In some embodiments, the bottom surface is closer to the current collecting member than the inner surface in the thickness direction, or the bottom surface is flush with the inner surface.

In the above technical solution, the bottom surface of the concave is closer to the current collecting member than the inner surface of the cover body along the thickness direction of the end cover, or the bottom surface of the concave is flush with the inner surface of the cover body. On the one hand, the concave depth of the concave is increased, and the space for accommodating the pressure relief mechanism in the concave is further increased; on the other hand, the distance between the abutting surface of the convex part and the bottom surface of the concave is relatively small, so that the thickness of the connecting part is relatively small, which is convenient for welding the connecting part and the current collecting member together from the outside of the end cover, and the firmness of the connecting part and the current collecting member after welding is improved.

In some embodiments, the pressure relief mechanism is integrally accommodated in the concave.

In the above technical solution, the pressure relief mechanism is integrally accommodated in the concave, so that the pressure relief mechanism does not occupy the space outside the concave, thereby further reducing the overall volume of the battery cell.

In some embodiments, the connecting part is formed with a pore passage, and the pore passage runs through two surfaces of the connecting part which are oppositely arranged along the thickness direction, and the pressure relief mechanism covers the pore passage along the thickness direction.

In the above technical solution, the connecting part is formed with the pore passage running through the connecting part, and the arrangement of the pore passage can relieve the stress generated when the connecting part is welded to the current collecting member. The pressure relief mechanism covers the pore passage along the thickness direction of the end cover. When the pressure relief mechanism actuates, the internal pressure of the battery cell can be relieved through the pore passage.

In some embodiments, the first welded part extends along a circumferential direction of the pore passage, the pore passage is located at an inner peripheral side of the welded part, and the pore passage is configured for injecting electrolyte to an interior of the battery cell.

In the above technical solution, the pore passage on the connecting part is an electrolyte injection hole, and electrolyte can be injected to the interior of the battery cell through the pore passage.

In some embodiments, the current collecting member is formed with a first central hole and a flow guiding channel for the electrolyte to enter the interior of the battery cell, the flow guiding channel is arranged around the first central hole, and the first central hole and the pore passage are oppositely arranged along the thickness direction.

In the above technical solution, the first central hole and the pore passage are oppositely arranged along the thickness direction of the end cover, and the flow guiding channel is arranged around the first central hole. In the process of injecting electrolyte into the battery cell through the pore passage, the electrolyte can not only flow into the battery cell along the first central hole, but also flow into the battery cell along the flow guiding channel, thus improving the injection efficiency and enabling the electrolyte to better soak the electrode assembly.

In some embodiments, the flow guiding channel includes a flow guiding through hole, the flow guiding through hole runs through two surfaces of the current collecting member which are oppositely arranged along the thickness direction; and/or the flow guiding channel includes a flow guiding groove, and the flow guiding groove is formed on at least one surface of the current collecting member in the thickness direction.

In the above technical solution, the flow guiding channel may be a flow guiding through hole running through two surfaces of the current collecting member along the thickness direction, and the electrolyte entering through the pore passage can quickly flow from the side of the current collecting member facing the end cover to the side facing away from the end cover through the flow guiding through hole. The flow guiding channel may also be a flow guiding groove formed on the surface of the current collecting member, and the electrolyte entering from the pore passage can flow laterally along the flow guiding groove, which is beneficial for the electrolyte to enter the electrode assembly to soak the pole pieces.

In a second aspect, an embodiment of the present disclosure provides a battery, which includes the battery cell provided in any one of the embodiments of the first aspect; and a case, configured for accommodating the battery cell.

In a third aspect, an embodiment of the present disclosure provides an electrical apparatus, which includes a battery provided in any one of the embodiments of the second aspect.

In the fourth aspect, an embodiment of the present disclosure provides a method for manufacturing a battery cell, which includes: providing a housing with an opening; providing an electrode assembly; providing an end cover, wherein the end cover is provided with a concave, and a connecting part is formed on the end cover in an area where the concave is provided; providing a current collecting member; providing a pressure relief mechanism, configured to be actuated when a pressure or a temperature inside the battery cell reaches a threshold value to relieve the pressure inside the battery cell; accommodating the electrode assembly in the housing; connecting the current collecting member to the electrode assembly; covering the opening with the end cover, such that the concave is located at one side of the end cover facing away from the electrode assembly; welding the connecting part and the current collecting member to form a first welded part; and mounting the pressure relief mechanism in the end cover, so that at least a portion of the pressure relief mechanism is accommodated in the concave, and the pressure relief mechanism covers the first welded part along a thickness direction of the end cover.

In a fifth aspect, an embodiment of the present disclosure further provides an apparatus for manufacturing a battery cell, which includes: a first providing device, configured for providing a housing with an opening; a second providing device, configured for providing an electrode assembly; a third providing device, configured for providing an end cover, wherein the end cover is provided with a concave, and a connecting part is formed on the end cover in an area where the concave is provided; a fourth providing device, configured for providing a current collecting member; a fifth providing device, configured for providing a pressure relief mechanism, wherein the pressure relief mechanism is configured to be actuated when a pressure or a temperature inside the battery cell reaches a threshold value to relieve the pressure inside the battery cell; and an assembling device, configured for: accommodating the electrode assembly in the housing; connecting the current collecting member to the electrode assembly; covering the opening with the end cover, such that the concave is located at a side of the end cover facing away from the electrode assembly; welding the connecting part and the current collecting member to form a first welded part; and mounting the pressure relief mechanism in the end cover, so that at least a portion of the pressure relief mechanism is accommodated in the concave, and the pressure relief mechanism covers the first welded part along a thickness direction of the end cover.

### Brief Description of Drawings

In order to illustrate the technical solutions of the embodiments of the present disclosure more clearly, the following drawings that need to be used in the embodiments will be briefly introduced. It is to be understood that the following drawings only show some embodiments of the present disclosure, so they shall not be regarded as limiting the scope. For those ordinarily skilled in the art, other relevant drawings may be obtained according to these drawings without creative efforts.
FIG. 1 is a structural schematic diagram of a vehicle provided by some embodiments of the present disclosure;
FIG. 2 is a structural schematic diagram of a battery provided by some embodiments of the present disclosure;
FIG. 3 is an exploded view of a battery cell provided by some embodiments of the present disclosure;
FIG. 4 is a sectional view of the battery cell shown in FIG. 3;
FIG. 5 is a bottom view of a battery cell provided by some other embodiments of the present disclosure;
FIG. 6 is a partial view of the battery cell shown in FIG. 4;
FIG. 7 is a schematic diagram of the connection between the pressure relief mechanism and the end cover shown in FIG. 6;
FIG. 8 is a schematic diagram of the connection between the pressure relief mechanism and the end cover provided by some other embodiments of the present disclosure;
FIG. 9 is a structural schematic diagram of the current collecting member shown in FIG. 6;
FIG. 10 is a flowchart of a method for manufacturing a battery cell provided by some embodiments of the present disclosure; and
FIG. 11 is a schematic block diagram of an apparatus for manufacturing a battery cell provided by some embodiments of the present disclosure.

Reference numerals: 10- case; 11- first part; 12- second part; 20- battery cell; 21-housing; 22- electrode assembly; 221- positive electrode tab; 222- negative electrode tab; 223- second central hole; 23- end cover; 231- concave; 2311- bottom surface; 232-connecting part; 2321- pore passage; 233- cover body; 2331- outer surface; 2332- inner surface; 234- convex; 2341- abutting surface; 24- current collecting member; 241- first central hole; 242- flow guiding channel; 25- pressure relief mechanism; 251- avoidance groove; 252- base; 253- pressure relief part; 2531- notch groove; 26- electrode terminal; 27- first welded part; 28- second welded part; 100- battery; 200- controller; 300- motor; 1000- vehicle; 2000- manufacturing apparatus; 2100- first providing device; 2200- second providing device; 2300- third providing device; 2400- fourth providing device; 2500- fifth providing device; 2600- assembling device; Z- thickness direction.

### Detailed Description of Embodiments

In order to make the objectives, technical solutions and advantages of the embodiments of the present disclosure clearer, the technical solutions in the embodiments of the present disclosure will be clearly described below with reference to the accompanying drawings in the embodiments of the present disclosure. Obviously, the described embodiments are some rather than all of the embodiments of the present disclosure.

Based on the embodiments of the present disclosure, all other embodiment obtained by a person ordinarily skilled in the art without making creative efforts shall fall within the scope of protection of the present disclosure.

Unless otherwise defined, all technical and scientific terms used in the present disclosure have the same meaning as commonly understood by those skilled in the art of the present disclosure. The terms used in the specification of the present disclosure is merely for the purpose of describing specific embodiments, and is not intended to limit the present disclosure. The terms "include", "comprise" and "have" in the description, claims and the above description of drawings of the present disclosure, as well as any variations thereof, are intended to cover non-exclusive inclusion.

The terms "first" and "second", etc. in the description and claims of the present disclosure or the above drawings are intended to distinguish different objects, but are not intended to describe a specific order or a primary and secondary relation.

Reference to "embodiment" in the present disclosure means that a particular feature, a structure or a characteristic described in conjunction with an embodiment may be included in at least one embodiment of the present disclosure. The occurrence of this phrase in various places in the specification does not necessarily refer to the same embodiment, nor is it an independent or alternative embodiment mutually exclusive with other embodiments.

In the description of the present disclosure, it should be noted that the terms "install", "mount", "connect" and "attach" should be broadly understood, for example, they may mean fixed connection, detachable connection or integrated connection, and may mean direct connection, or indirect connection through an intermediate medium, or internal communication between two elements. For those ordinarily skilled in the art, the specific meanings of the above terms in the present disclosure can be understood according to the specific circumstances.

In the present disclosure, the term "and/or" only indicates a relation describing the related objects, which indicates that there may be three kinds of relations. For example, "A and/or B" may indicate that A exists alone, A and B exist at the same time, or B exists alone. In addition, the character "/" in the present disclosure generally indicates that the contextual objects have an "OR" relation.

In the embodiments of the present disclosure, the same reference numerals indicate the same components, and for the sake of brevity, detailed descriptions of the same components are omitted in different embodiments. It should be understood that the dimensions such as the thickness, length and width of various components and the overall thickness, length and width of the integrated device in the embodiments of the present disclosure shown in the accompanying drawings are only illustrative, and should not constitute any limitation on the present disclosure.

In the present disclosure, "plurality of" refers to more than two (including two).

In the present disclosure, the battery cell may include a lithium-ion secondary battery, a lithium-ion primary battery, a lithium-sulfur battery, a sodium-lithium ion battery, a sodiumion battery or a magnesium-on battery, etc., and embodiments of the present disclosure are not limited to this. The battery cell may have a cylindrical, flat, or rectangular shape or other shapes, and embodiments of the present disclosure are not limited to this. Battery cells are generally divided into three types according to the packaging: cylindrical battery cells, square battery cells and pouch battery cells, and embodiments of the present disclosure are not limited to this.

The battery mentioned in the embodiment of the present disclosure refers to a single physical module including one or more battery cells to provide higher voltage and capacity. For example, the battery mentioned in the present disclosure may include a battery module or a battery pack, etc. A battery generally includes a case for encapsulating one or more battery cells. The case can prevent liquid or other foreign matter from influencing the charging or discharging of the battery cell.

The battery cell includes an electrode assembly and electrolyte, and the electrode assembly is composed of a positive pole piece, a negative pole piece and an isolating membrane. The battery cell works mainly by metal ions moving between the positive pole piece and the negative pole piece. The positive pole piece includes a positive current collector and a positive electrode active substance layer. The positive electrode active substance layer is coated on the surface of the positive current collector, the positive current collector without the positive electrode active substance layer protrudes from the positive current collector coated with the positive electrode active substance layer, and the positive current collector without the positive electrode active substance layer is used as a positive electrode tab. Taking a lithium ion battery as an example, the positive current collector may be made of aluminum, and the positive active substance may be lithium cobalt, lithium iron phosphate, lithium ternary or lithium manganate, etc. The negative pole piece includes a negative current collector and a negative active substance layer. The negative active substance layer is coated on the surface of the negative current collector, the negative current collector without the negative active substance layer protrudes from the negative current collector coated with the negative active substance layer, and the negative current collector without the negative active substance layer is used as a negative electrode tab. The negative current collector may be made of copper, and the negative active substance may be carbon or silicon, etc. In order to ensure that a large current can pass without fusing, a plurality of positive electrode tabs are stacked together, and a plurality of negative electrode tabs are stacked together. The material of the isolating membrane may be PP (polypropylene) or PE (polyethylene) , etc. In addition, the electrode assembly may have a wound structure or a laminated structure, and the embodiments of the present disclosure are not limited to this.

For the development of battery technology, many design factors should be considered at the same time, such as energy density, cycle life, discharge capacity, charge-discharge rate and other performance parameters. In addition, it is also necessary to consider the safety of batteries.

For battery cells, the main safety hazards come from the process of charging and discharging, and a suitable environmental temperature design is necessary. In order to effectively avoid unnecessary losses, there are generally at least three protective measures for battery cells. Specifically, the protective measures at least include switching elements, selection of appropriate isolating membrane materials and pressure relief mechanisms. The switching element refers to an element that can stop charging or discharging the battery when the temperature or resistance in the battery cell reaches a certain threshold. The isolating membrane is configured for isolating the positive pole piece from the negative pole piece, and can automatically dissolve the micro-scale (even nanoscale) micropores attached to it when the temperature rises to a certain value, so that metal ions cannot pass through the isolating membrane, and the internal reaction of the battery cell is terminated.

The pressure relief mechanism refers to a component that actuates to relieve the pressure or temperature inside the battery cell when the pressure or temperature inside the battery cell reaches a predetermined threshold. The design of the threshold varies according to different design requirements. The threshold may depend on the materials of one or more of the positive pole piece, negative pole piece, electrolyte and isolating membrane in the battery cell.

The wording "actuate" mentioned in the present disclosure means that the pressure relief mechanism performs an action or is activated to a certain state, so that the pressure and temperature inside the battery cell can be relieved. The action performed by the pressure relief mechanism may include, but is not limited to: at least a portion of the pressure relief mechanism is broken, crushed, torn or opened, etc. When the pressure relief mechanism actuates, the high-temperature and high-pressure substances in the battery cell will be discharged from the actuated position as emissions. In this way, the pressure and temperature of the battery cell can be relieved under controllable pressure or temperature, thus avoiding potential more serious accidents.

For ordinary battery cells, the end cover needs to be electrically connected to the electrode assembly, so that the end cover can be used as an output electrode of the battery cell for outputting electric energy. In order to better realize the electrical connection between the end cover and the tab, a current collecting member is generally arranged between the electrode assembly and the end cover, and the end cover and the electrode assembly are connected through the current collecting member to realize the electrical connection between the end cover and the electrode assembly.

The inventors noticed that in order to ensure the stability of overcurrent between the end cover and the current collecting member, the current collecting member and the end cover are generally welded together. The outside of the end cover is provided with a welding groove, and the end cover is welded to the current collecting member in the area where the welding groove is provided to form a welded part. At the same time, in order to ensure the safety of the battery cell, the end cover is generally provided with a pressure relief mechanism. In the direction perpendicular to the thickness direction of the end cover, the welding groove is located at the outside of the pressure relief mechanism, and the welded part is also located at the outside of the pressure relief mechanism. Due to the limitation of the welding groove and the welded part, the size of the pressure relief mechanism cannot be enlarged, resulting in insufficient pressure relief ability of the pressure relief mechanism. When the pressure relief ability of the pressure relief mechanism is poor, the internal emissions of the battery cell cannot be discharged in time when the heat is out of control, which is likely to result in explosion and fire, etc. of the battery cell, and the safety of the battery cell is poor.

Based on the above considerations, in order to solve the problem of poor safety of the battery cell, the inventors have designed a battery cell through in-depth research. In the battery cell, a side of the end cover facing away from the electrode assembly is provided with a concave, the concave is configured for accommodating at least a portion of the pressure relief mechanism, a connecting part is formed on the end cover in an area where the concave is provided, the connecting part is configured for being welded to the current collecting member to form a first welded part, and the pressure relief mechanism covers the first welded part along a thickness direction of the end cover.

In such a battery cell, since the connecting part is formed on the end cover in the area where the concave is provided, the connecting part is welded to the current collecting member to form the first welded part, and the pressure relief mechanism covers the first welded part along the thickness direction of the end cover, so that the pressure relief mechanism and the first welded part are distributed in the thickness direction of the end cover. The size of the pressure relief mechanism in the direction perpendicular to the thickness direction of the end cover is not limited by the first welded part, so that the sizes of the concave and the pressure relief mechanism can be enlarged as required, which is beneficial to improve the pressure relief capacity of the pressure relief mechanism and the safety of the battery cell.

The technical solutions described in the embodiments of the present disclosure are applicable for batteries and electrical apparatus using batteries.

The electrical apparatus may be vehicles, mobile phones, portable devices, notebook computers, ships, spacecrafts, electric toys and power tools, etc. Vehicles may be fuel vehicles, gas vehicles or new energy vehicles, and new energy vehicles may be pure electric vehicles, hybrid electric vehicles or extended-range vehicles, etc. Spacecraft includes airplanes, rockets, space shuttles and spaceships, etc. Electric toys include fixed or mobile electric toys, such as game machines, electric car toys, electric ship toys and electric airplane toys, etc. Power tools include metal cutting power tools, grinding power tools, assembling power tools and railway power tools, such as electric drills, electric grinders, electric wrenches, electric screwdrivers, electric hammers, electric impact drills, concrete vibrators and electric planers. The embodiments of the present disclosure do not impose special restrictions on the above-mentioned electrical apparatus.

For the convenience of description, the following embodiments take a vehicle as the electrical apparatus for example.

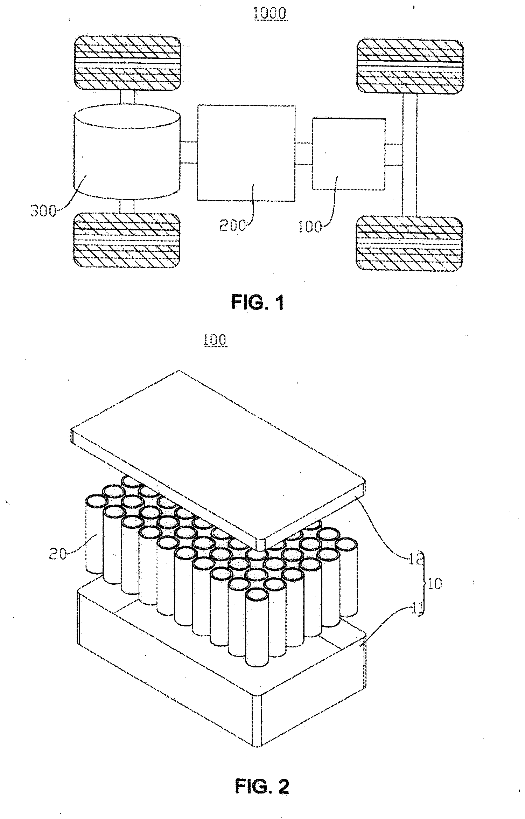

Please refer to FIG. 1, which is a structural schematic diagram of a vehicle 1000 provided by some embodiments of the present disclosure. A battery 100 is arranged inside the vehicle 1000, the battery 100 may be arranged at a bottom, head or tail of the vehicle 1000. The battery 100 may be used for power supply of the vehicle 1000. For example, the battery 100 may be used as an operating power supply of the vehicle 1000.

The vehicle 1000 may further include a controller 200 and a motor 300, and the controller 200 is configured for controlling the battery 100 to supply power to the motor 300, for example, for the power demand of the vehicle 1000 when it is started, navigating and running.

In some embodiments of the present disclosure, the battery 100 may not only be used as an operating power supply for the vehicle 1000, but also be used as a driving power supply for the vehicle 1000, providing driving power for vehicle 1000 instead or partially instead of fuel oil or natural gas.

Please refer to FIG. 2, which is a structural schematic diagram of a battery 100 provided by some embodiments of the present disclosure. The battery 100 includes a case 10 and a battery cell 20, and the case 10 is configured for accommodating the battery cell 20.

The case 10 is a component for accommodating the battery cell 20, the case 10 provides an accommodating space for the battery cell 20, and the case 10 may have various structures. In some embodiments, the case 10 may include a first part 11 and a second part 12, and the first part 11 and the second part 12 are mutually covered to define an accommodating space for accommodating the battery cell 20. The first part 11 and the second part 12 may have various shapes, such as cuboids, cylinders, etc. The first part 11 may have a hollow structure with one side open, and the second part 12 may also have a hollow structure with one side open. The open side of the second part 12 covers the open side of the first part 11, thus forming the case 10 with an accommodating space. Alternatively, the first part 11 may have a hollow structure with one side open, and the second part 12 may have a plate-like structure. The second part 12 may cover the open side of the first part 11, thus forming the case 10 with an accommodating space. The first part 11 and the second part 12 may be sealed by a sealing element, which may be a sealing ring, sealant, etc.

In the battery 100, there may be one battery cell 20 or a plurality of battery cells 20. If there are a plurality of battery cells 20, the plurality of battery cells 20 may be connected in series or in parallel or in series parallel. A series-parallel connection means that there are both series and parallel connections among the plurality of battery cells 20. The plurality of battery cells 20 may be connected in series, in parallel or in series-parallel to form a battery module, and then a plurality of battery modules are connected in series, in parallel or in series-parallel to form a whole, which is accommodated in the case 10. Alternatively, all the battery cells 20 may be directly connected in series, parallel or in series-parallel together, and then all the battery cells 20 as a whole may be accommodated in the case 10.

In some embodiments, the battery 100 may further include a bus component, and a plurality of battery cells 20 may be electrically connected through the bus component, so as to realize series connection, parallel connection or series-parallel connection of the plurality of battery cells 20. The bus component may be a conductor made of metal, such as copper, iron, aluminum, stainless steel, aluminum alloy, etc.

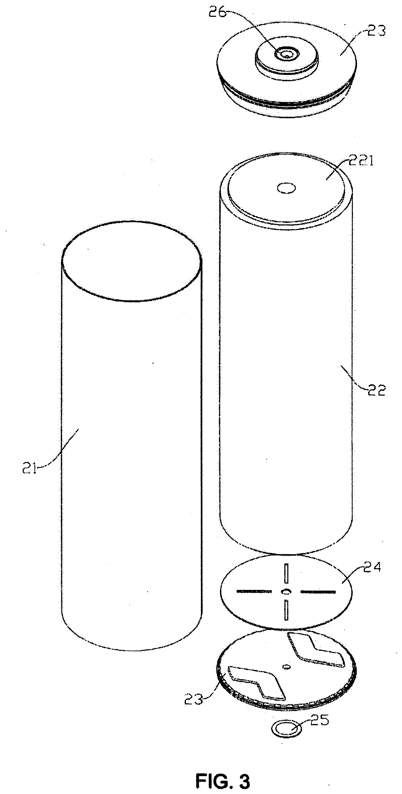

Please refer to FIG. 3, which is an exploded view of a battery cell 20 provided by some embodiments of the present disclosure. The battery cell 20 includes a housing 21, an electrode assembly 22, an end cover 23, a current collecting member 24 and a pressure relief mechanism 25.

The housing 21 is a component for accommodating the electrode assembly 22. The housing 21 may have a hollow structure which has an opening at one end and has an accommodating cavity for accommodating the electrode assembly 22 inside, or the housing 21 may have a hollow structure which has openings at opposite two ends and has an accommodating cavity for accommodating the electrode assembly 22 inside. The housing 21 may have various shapes, such as a cylinder, a cuboid, etc. The housing 21 may be made of various materials, such as copper, iron, aluminum, steel, aluminum alloy, etc.

The electrode assembly 22 is a component in the battery cell 20 where electrochemical reaction occurs. The electrode assembly 22 may include a positive pole piece, a negative pole piece and an isolating membrane. The electrode assembly 22 may has a wound structure formed by winding a positive pole piece, an isolating membrane and a negative pole piece, or a laminated structure formed by stacking a positive pole piece, an isolating membrane and a negative pole piece. The electrode assembly 22 has a positive electrode tab 221 and a negative electrode tab 222 (not shown in FIG. 3). The positive electrode tab 221 may be a portion of the positive pole piece that is not coated with a positive active substance layer, and the negative electrode tab 222 may be a portion of the negative pole piece that is not coated with a negative active substance layer.

The end cover 23 is a component for covering the opening of the housing 21 to isolate the internal environment of the battery cell 20 from the external environment. The shape of the end cover 23 may be adapted to the shape of the housing 21. For example, the housing 21 has a cuboid structure, and the end cover 23 has a rectangular plate-like structure adapted to the housing 21. For another example, the housing 21 has a cylindrical structure, and the end cover 23 has a circular plate-like structure adapted to the housing 21. The end cover 23 may also be made of various materials, such as copper, iron, aluminum, steel, aluminum alloy, etc., and the material of the end cover 23 may be the same as or different from that of the housing 21.

In the battery cell 20, there may be one or two end covers 23, and the number of end covers 23 may be determined according to the specific structure of the housing 21. For example, the housing 21 has a hollow structure with an opening at one end, and one end cover 23 may be provided correspondingly. For another example, the housing 21 has a hollow structure with openings formed at opposite two ends, two end covers 23 may be provided correspondingly, and the two end covers 23 cover the two openings of the end covers 23 respectively.

The current collecting member 24 is a conductor, and the current collecting member 24 may be a conductor made of metal, such as copper, iron, aluminum, steel, aluminum alloy, etc. In the battery cell 20, there may be one or two current collecting members 24. In the embodiment where there is one end cover 23 in the battery cell 20, one current collecting member 24 may be provided correspondingly, and the electrode assembly 22 may be connected to the end cover 23 through the current collecting member 24. Exemplarily, the positive electrode tab 221 of the electrode assembly 22 is connected to the end cover 23 through the current collecting member 24, and the negative electrode tab 222 of the electrode assembly 22 is connected to the housing 21, so that the end cover 23 and the housing 21 are respectively used as two output electrodes with opposite polarities of the battery cell 20. In the embodiment where there are two end covers 23 in the battery cell 20, two current collecting members 24 may be provided correspondingly, and one end cover 23 may be provided with one current collecting member 24 correspondingly. Exemplarily, as shown in FIG. 3, the positive electrode tab 221 of the electrode assembly 22 is connected to the electrode terminal 26 on one end cover 23 through a current collecting member 24, and the negative electrode tab 222 of the electrode assembly 22 is connected to the other end cover 23 through another current collecting member 24, so that the electrode terminal 26 of one end cover 23 and the other end cover 23 are respectively used as two output electrodes with opposite polarities of the battery cell 20.

The pressure relief mechanism 25 is a component for relieving the pressure inside the battery cell 20. When the pressure or temperature inside the battery cell 20 reaches a threshold value, the pressure inside the battery cell 20 is relieved by the pressure relief mechanism 25. The pressure relief mechanism 25 may adop the form of an explosion-proof valve, an explosion-proof disc, an air valve, a pressure relief valve or a safety valve, etc., and may specifically adopt a pressure-sensitive or temperature-sensitive element or structure. That is, when the pressure or temperature inside the battery cell 20 reaches a predetermined threshold, the pressure relief mechanism 25 performs an action or a weak structure provided in the pressure relief mechanism 25 is destroyed, thereby forming an opening or a channel for relieving the pressure or temperature inside the battery cell 20.

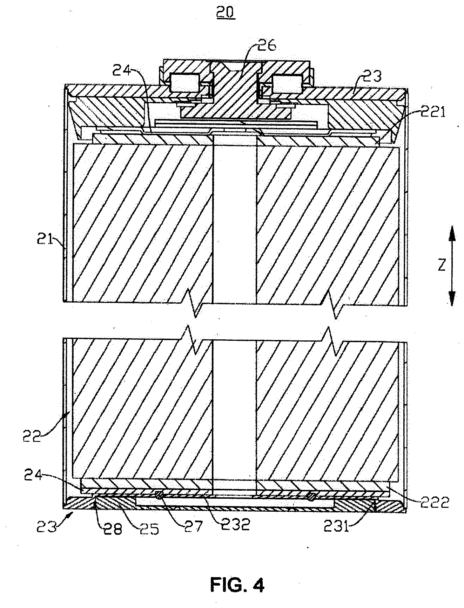

Please refer to FIG. 4, which is a sectional view of the battery cell 20 shown in FIG. 3. An embodiment of the present disclosure provides a battery cell 20, which includes a housing 21, an electrode assembly 22, an end cover 23, a current collecting member 24 and a pressure relief mechanism 25. The housing 21 has an opening. The electrode assembly 22 is configured for being accommodated in the housing 21. The end cover 23 is configured for covering the opening. The current collecting member 24 is located on the side of the electrode assembly 22 facing the end cover 23, and is configured for connecting the electrode assembly 22 and the end cover 23, so as to realize the electrical connection between the electrode assembly 22 and the end cover 23. The pressure relief mechanism 25 is arranged on the end cover 23, and is configured to be actuated when the pressure or temperature inside the battery cell 20 reaches a threshold value to relieve the pressure inside the battery cell 20.

The side of the end cover 23 facing away from the electrode assembly 22 is provided with a concave 231 for accommodating at least a portion of the pressure relief mechanism 25, and a connecting part 232 is formed on the end cover 23 in the area where the concave 231 is provided. The connecting part 232 is configured for being welded to the current collecting member 24 to form the first welded part 27, and the pressure relief mechanism 25 covers the first welded part 27 along the thickness direction Z of the end cover 23.

The pressure relief mechanism 25 is a component for relieving the pressure inside the battery cell 20. The pressure relief mechanism 25 and the end cover 23 may be connected in various ways, such as bonding, welding, interference fit connection, etc.

The current collecting member 24 is connected to both the end cover 23 and the electrode assembly 22, so as to realize electrically connection between the electrode assembly 22 and the end cover 23. The current collecting member 24 may be connected to the end cover 23 and the positive electrode tab 221 of the electrode assembly 22, or may be connected to the end cover 23 and the negative electrode tab 222 of the electrode assembly 22. The current collecting member 24 may be connected to the positive electrode tab 221 or the negative electrode tab 222 in a non-fixed way. For example, the current collecting member 24 abuts against the positive electrode tab 221 or the negative electrode tab 222. The current collecting member 24 may also be connected to the positive electrode tab 221 or the negative electrode tab 222 in a fixed way. For example, the current collecting member 24 is welded to the positive electrode tab 221 or the negative electrode tab 222.

The concave 231 is arranged on the side of the end cover 23 facing away from the electrode assembly 22. It can be understood that the opening of the concave 231 faces away from the electrode assembly 22. The concave 231 is concave from the surface of the end cover 23 facing away from the electrode assembly 22 in the direction facing the electrode assembly 22, and the opening of the concave 231 is formed on this surface. The concave 231 may have various shapes, such as a circle, a square, etc. The concave 231 provides a space for the pressure relief mechanism 25. The pressure relief mechanism 25 may be completely accommodated in the concave 231 or partially accommodated in the concave 231. For example, in the Z direction of the thickness direction of the end cover 23, one portion of the pressure relief mechanism 25 is located in the concave 231, and the other portion is located outside the concave 231.

The connecting part 232 is formed on the end cover 23 in the area where the concave 231 is provided. The connecting part 232 is the part of the end cover 23 located at the bottom of the concave 231. It can also be understood that the connecting part 232 is the part left in the concave direction of the concave 231 after the end cover 23 is provided with the concave 231.

The first welded part 27 is the part that connects the connecting part 232 and the current collecting member 24 after the connecting part 232 is welded to the current collecting member 24, and the first welded part 27 is formed in the area where the connecting part 232 is welded to the current collecting member 24 to form a welding mark. Taking the connecting part 232 and the current collecting member 24 being welded by means of keyhole welding as ab example, the first welded part 27 may be a part where the connecting part 232 and the current collecting member 24 are welded together.

The pressure relief mechanism 25 covers the first welded part 27 along the thickness direction Z of the end cover 23, that is, the pressure relief mechanism 25 completely covers the first welded part 27 along the thickness direction Z of the end cover 23. It can also be understood that the first welded part 27 is located in the area formed by the projection of the pressure relief mechanism 25 along the thickness direction Z of the end cover 23.

In the embodiment of the present disclosure, at least a portion of the pressure relief mechanism 25 is accommodated in the concave 231 of the end cover 23, which reduces the space outside the battery cell 20 occupied by the pressure relief mechanism 25 and makes the overall volume of the battery cell 20 smaller. Since the connecting part 232 is formed on the end cover 23 in the area where the concave 231 is provided, the connecting part 232 is welded to the current collecting member 24 to form the first welded part 27, and the pressure relief mechanism 25 covers the first welded part 27 along the thickness direction Z of the end cover 23, so that the pressure relief mechanism 25 and the first welded part 27 are distributed in the thickness direction Z of the end cover 23, and the size of the pressure relief mechanism 25 in the direction perpendicular to the thickness direction Z of the end cover 23 is not limited by the first welded part 27. The size of the concave 231 and the pressure relief mechanism 25 can be enlarged as required, which is beneficial to improve the pressure relief capacity of the pressure relief mechanism 25 and the safety of the battery cell 20.

In some embodiments, continuing to refer to FIG. 4, the pressure relief mechanism 25 is welded to the end cover 23 to form a second welded part 28, and along the thickness direction Z of the end cover 23, the projection of the second welded part 28 does not overlap with the projection of the first welded part 27.

The second welded part 28 is the part that connects the pressure relief mechanism 25 and the end cover 23 after the pressure relief mechanism 25 is welded to the end cover 23, and the second welded part 28 is formed in the area where the pressure relief mechanism 25 is welded to the end cover 23 to form a welding mark. For example, the pressure relief mechanism 25 and the end cover 23 are welded by means of keyhole welding, and the second welded part 28 may be a part where the pressure relief mechanism 25 and the connecting part 232 of the end cover 23 are welded together. For another example, the pressure relief mechanism 25 and the end cover 23 are welded by means of seam welding, and the second welded part 28 may be solder connecting the outer peripheral surface of the pressure relief mechanism 25 and the inner peripheral surface of the concave 231.

In this embodiment, the pressure relief mechanism 25 is welded to the end cover 23 to form a second welded part 28, and the second welded part 28 functions in connecting the pressure relief mechanism 25 and the end cover 23, so as to improve the firmness of the pressure relief mechanism 25 after being arranged on the end cover 23. Since the projection of the second welded part 28 along the thickness direction Z of the end cover 23 does not overlap with the projection of the first welded part 27 along the thickness direction Z of the end cover 23, in the process of welding the pressure relief mechanism 25 and the end cover 23 to form the second welded part 28, the second welded part 28 will not be formed at the position where the first welded part 27 is located, thus avoiding damage to the first welded part 27 due to secondary welding, and ensuring the stability of the connecting part 232 after being welded to the current collecting member 24.

In some embodiments, continuing to refer to FIG. 4, both the first welded part 27 and the second welded part 28 extend along the circumferential direction of the end cover 23, and the second welded part 28 is located at the outer peripheral side of the first welded part 27.

The first welded part 27 may have a closed structure extending along the circumferential direction of the end cover 23, for example, the first welded part 27 is annular. The first welded part 27 may also have a non-closed structure extending along the circumferential direction of the end cover 23, for example, the first welded part 27 is divided into a plurality of segments, which are arranged at intervals along the circumferential direction of the end cover 23. The second welded part 28 may have a closed structure extending along the circumferential direction of the end cover 23, for example, the second welded part 28 is annular. The second welded part 28 may also have a non-closed structure extending along the circumferential direction of the end cover 23, for example, the second welded part 28 is divided into a plurality of segments, which are arranged at intervals along the circumferential direction of the end cover 23.

The second welded part 28 is located at the outer peripheral side of the first welded part 27, so that the second welded part 28 and the first welded part 27 are staggered in the radial direction of the end cover 23. As shown in FIG. 4, for example, both the first welded part 27 and the second welded part 28 are annular. The second welded part 28 is located at the outer peripheral side of the first welded part 27, so that the first welded part 27 is an inner annulus and the second welded part 28 is an outer annulus.

In this embodiment, the second welded part 28 is located at the outer peripheral side of the first welded part 27, so that the projection of the second welded part 28 along the thickness direction Z of the end cover 23 does not overlap with the projection of the first welded part 27 along the thickness direction Z of the end cover 23, and the size of the second welded part 28 in the circumferential direction of the end cover 23 is larger, thus improving the firmness after welding the pressure relief mechanism 25 and the end cover 23.

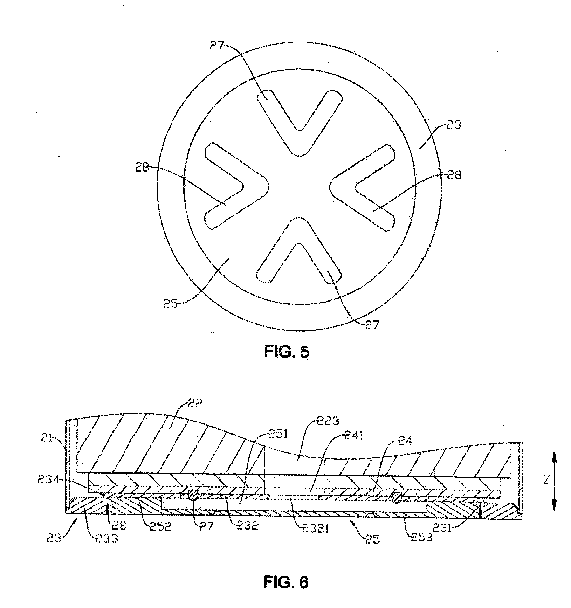

In some other embodiments, please refer to FIG. 5, which is a bottom view of the battery cell 20 provided by some other embodiments of the present disclosure. In the circumferential direction of the end cover 23, second welded parts 28 and first welded parts 27 are alternately arranged. Thus, the projection of the second welded part 28 along the thickness direction Z of the end cover 23 and the projection of the first welded part 27 along the thickness direction Z of the end cover 23 do not overlap, and the arrangement is simple.

The second welded parts 28 and the first welded parts 27 are alternately arranged, so that the first welded parts 27 and the second welded parts 28 are staggered in the circumferential direction of the end cover 23. The first welded part 27 and the second welded part 28 may be one or more. Exemplarily, in FIG. 5, there are two first welded parts 27 and two second welded parts 28.

Exemplarily, the first welded part 27 and the second welded part 28 are both V-shaped.

In some embodiments, please refer to FIG. 6, which is a partial view of the battery cell 20 shown in FIG. 4. The side of the pressure relief mechanism 25 facing the connecting part 232 is formed with an avoidance groove 251, which is configured for avoiding the first welded part 27.

The avoidance groove 251 is an avoidance space for avoiding the first welded part 27 on the pressure relief mechanism 25, and the avoidance groove 251 can accommodate the portion of the first welded part 27 protruding from the connecting part 232. The avoidance groove 251 may be circular or square, etc. Exemplarily, the first welded part 27 is annular, and the avoidance groove 251 has a circular structure coaxially formed with the first welded part 27.

It should be noted that, regardless of whether the first welded part 27 and the second welded part 28 are staggered in the radial direction of the end cover 23 or in the circumferential direction of the end cover 23, an avoidance groove 251 for avoiding the first welded part 27 may be formed on the side of the pressure relief mechanism 25 facing the connecting part 232.

In this embodiment, the avoidance groove 251 functions in avoiding the first welded part 27, which is beneficial to make the pressure relief mechanism 25 abut against the connecting part 232, thus making the pressure relief mechanism 25 more stable when being welded to the end cover 23, and improving the welding quality of the pressure relief mechanism 25 and the end cover 23.

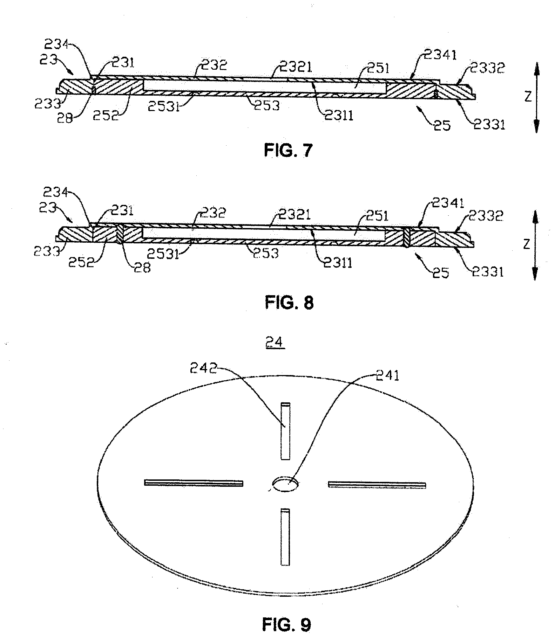

In some embodiments, please refer to FIG. 7, which is a schematic diagram of the connection between the pressure relief mechanism 25 and the end cover 23 shown in FIG. 6. The pressure relief mechanism 25 includes a base 252 and a pressure relief part 253. The base 252 is configured for being welded to the end cover 23 to form the second welded part 28. The pressure relief part 253 is configured to be actuated when the pressure or temperature inside the battery cell 20 reaches a threshold value, so as to relieve the pressure inside the battery cell 20. The pressure relief part 253 is connected to the inner peripheral surface of the base 252, and covers the first welded part 27 along the thickness direction Z of the end cover 23. The pressure relief part 253 and the base 252 jointly define an avoidance groove 251.

The base 252 is the part where the pressure relief mechanism 25 is welded to the end cover 23, and the pressure relief part 253 is the part where the pressure relief mechanism 25 relieves the pressure inside the battery cell 20. The base 252 and the pressure relief part 253 may be integrally formed.

Exemplarily, the pressure relief mechanism 25 is a circular explosion-proof disc, the base 252 has an annular structure, the pressure relief part 253 has a circular structure, and the outer peripheral surface of the pressure relief part 253 is connected to the inner peripheral surface of the base 252. The inner peripheral surface of the base 252 refers to the surface located inside the base 252 and extending along the thickness direction Z of the end cover 23. For example, the base 252 is annular, and the inner peripheral surface of the base 252 is a circular surface inside the base 252.

The avoidance groove 251 is jointly defined by the pressure relief part 253 and the base 252. The side surface of the avoidance groove 251 is the inner peripheral surface of the base 252, and the bottom surface 2311 of the avoidance groove 251 is the surface of the pressure relief part 253 facing the connecting part 232.

When the pressure or temperature inside the battery cell 20 reaches a threshold value, the actuation of the pressure relief part may refer to the pressure relief part 253 being broken, crushed, torn or opened. Exemplarily, in FIG. 7, the pressure relief part 253 is formed with a notch groove 2531. When the internal pressure or temperature of the battery cell 20 reaches a threshold, the pressure relief part 253 breaks from the notch groove 2531 to form an opening for relieving the internal pressure or temperature of the battery cell 20.

In this embodiment, the pressure relief part 253 and the base 252 jointly define the avoidance groove 251 for avoiding the first welded part 27, so that the pressure relief part 253 for pressure relief is formed correspondingly in the area where the avoidance groove 251 is formed on the pressure relief mechanism 25, and the structure is simple, which is beneficial for the pressure relief mechanism 25 to relieve the pressure inside the battery cell 20.

Continuing to refer to FIG.7, in some embodiments, the thickness of the pressure relief part 253 is smaller than that of the base 252.

The thickness of the pressure relief part 253 is the dimension of the pressure relief part 253 in the thickness direction Z of the end cover 23, and the thickness of the base 252 is the dimension of the pressure relief part 253 in the thickness direction Z of the end cover 23.

Exemplarily, along the thickness direction Z of the end cover 23, the surface of the pressure relief part 253 facing away from the connecting part 232 is coplanar with the surface of the base 252 facing away from the connecting part 232.

The thickness of the pressure relief part 253 is smaller than that of the base 252, which makes the pressure relief mechanism 25 weaker in the area of the pressure relief part 253, which is convenient for relieving the pressure inside the battery cell 20. When the pressure relief part 253 is formed with the notch groove 2531, the notch groove 2531 does not need to be too deep to realize the actuation of the pressure relief part 253, so as to relieve the pressure inside the battery cell 20.

In some embodiments, continuing to refer to FIG. 7, the outer peripheral surface of the base 252 is welded to the inner peripheral surface of the concave 231 to form the second welded part 28.

The outer peripheral surface of the base 252 refers to the surface located outside the base 252 and extending along the thickness direction Z of the end cover 23. For example, the base 252 is annular, and the outer peripheral surface of the base 252 is a circular surface outside the base 252. The inner peripheral surface of the concave 231 is the surface where the concave 231 extends along the thickness direction Z of the end cover 23.

The second welded part 28 is located in the gap area formed between the outer peripheral surface of the base 252 and the inner peripheral surface of the concave 231, so that the second welded part 28 is far away from the pressure relief part 253, and the risk of damage to the pressure relief part 253 during welding the pressure relief mechanism 25 is reduced. The pressure relief mechanism 25 may be welded to the end cover 23 by means of seam welding, so that the welding is simple, and the welding efficiency is high.

In some other embodiments, please refer to FIG. 8, which is a schematic diagram of the connection between the pressure relief mechanism 25 and the end cover 23 provided by some other embodiments of the present disclosure. The base 252 is welded to the connecting part 232 to form the second welded part 28.

The base 252 and the connecting part 232 may be welded together by means of keyhole welding, and the second welded part 28 passes through the base 252 and is combined with the connecting part 232, so that the pressure relief mechanism 25 has good firmness after being welded to the end cover 23.

In some embodiments, referring to FIGS. 6 to 8, the end cover 23 includes a cover body 233 and a convex 234. The cover body 233 is configured for being connected to the housing 21. The cover body 233 has an outer surface 2331 and an inner surface 2332 which are oppositely arranged along the thickness direction Z of the end cover 23. The inner surface 2332 faces the current collecting member 24, and the concave 231 is concave from the outer surface 2331 in the direction facing the current collecting member 24. The convex 234 is convexly arranged on the inner surface 2332 and located at the position of the cover body 233 corresponding to the concave 231. The convex 234 has an abutting surface 2341 for abutting against the current collecting member 24, and the portion of the end cover 23 between the abutting surface 2341 and the bottom surface 2311 of the concave 231 is a connecting part 232.

The cover body 233 is the main part where the end cover 23 is connected to the housing 21, and the convex 234 is the part where the end cover 23 protrudes from the cover body 233. The cover body 233 may have a plate-like structure, and the convex 234 may be a boss provided on the inner surface 2332 of the cover body 233. The inner surface 2332 of the cover body 233 is the surface of the cover body 233 facing the current collecting member 24 along the thickness direction Z of the end cover 23, and the outer surface 2331 of the cover body 233 is the surface of the cover body 233 facing away from the current collecting member 24 along the thickness direction Z of the end cover 23. The abutting surface 2341 of the convex 234 is the end surface of the convex 234 facing away from the cover body 233 in the thickness direction Z of the end cover 23. The bottom surface 2311 of the concave 231 is the surface of the concave 231 closest to the current collecting member 24 along the thickness direction Z of the end cover 23, and the bottom surface 2311 of the concave 231 and the abutting surface 2341 of the convex portion 234 are the two surfaces of the connecting part 232 along the thickness direction Z of the end cover 23, respectively.

In this embodiment, the convex 234 is located at the position of the cover body 233 corresponding to the concave 231, and convexly arranged on the inner surface 2332 of the cover body 233. The convex 234 can reinforce the position where the cover body 233 is provided with the concave 231, and make the concave 231 be concave as deep as possible in the direction facing the current collecting member 24, which is beneficial to increase the concave depth of the concave 231. In addition, the convex 234 is convexly arranged on the inner surface 2332 of the cover body 233, which makes it easier to ensure the flatness of the abutting surface 2341, so that the convex 234 can keep good contact with the current collecting member 24 and ensure the flow area between the current collecting member 24 and the end cover 23.

In some embodiments, along the thickness direction Z of the end cover 23, the bottom surface 2311 of the concave 231 is closer to the current collecting member 24 than the inner surface 2332 of the cover body 233; or the bottom surface 2311 of the concave 231 is flush with the inner surface 2332 of the cover body 233.

If the bottom surface 2311 of the concave 231 is closer to the current collecting member 24 than the inner surface 2332 of the cover body 233, the concave 231 is concave into the convex 234. If the bottom surface 2311 of the concave 231 is flush with the inner surface 2332 of the cover body 233, the bottom surface 2311 of the concave 231 and the inner surface 2332 of the cover body 233 are located in the same plane.

On the one hand, the above structure increases the concave depth of the concave 231, and increases the space for accommodating the pressure relief mechanism 25 in the concave 231. On the other hand, the distance between the abutting surface 2341 of the convex part 234 and the bottom surface 2311 of the concave 231 is relatively small, so that the thickness of the connecting part 232 is relatively small, which is convenient for welding (such as keyhole welding) the connecting part 232 and the current collecting member 24 together from the outside of the end cover 23, thus improving the firmness of the connecting part 232 and the current collecting member 24 after welding.

In some embodiments, the pressure relief mechanism 25 is integrally accommodated in the concave 231. There is no portion of the pressure relief mechanism 25 outside the concave 231, and the pressure relief mechanism 25 will not occupy the space outside the concave 231, thus further reducing the overall volume of the battery cell 20.

In some embodiments, continuing to refer to FIGS. 6 to 8, the connecting part 232 is formed with a pore passage 2321. The pore passage 2321 runs through two surfaces of the connecting part 232 which are oppositely arranged along the thickness direction Z of the end cover 23, and the pressure relief mechanism 25 covers the pore passage 2321 along the thickness direction Z of the end cover 23.

The pore passage 2321 has a through-hole structure arranged on the connecting part 232, and the pore passage 2321 may be formed at the center of the connecting part 232. In the embodiment where the pressure relief mechanism 25 is formed with an avoidance groove 251, the pore passage 2321 is in communication with the avoidance groove 251.

In the embodiment where the end cover 23 has a convex 234, two surfaces of the connecting part 232 which are oppositely arranged along the thickness direction Z of the end cover 23 are the abutting surface 2341 of the convex 234 and the bottom surface 2311 of the concave 231, respectively.

In this embodiment, the connecting part 232 is formed with a pore passage 2321 running through the connecting part 232, and the arrangement of the pore passage 2321 can relieve the stress generated when the connecting part 232 is welded to the current collecting member 24. The pressure relief mechanism 25 covers the pore passage 2321 along the thickness direction Z of the end cover 23, and the pressure inside the battery cell 20 can be relieved through the pore passage 2321 when the pressure relief mechanism 25 actuates.

In some embodiments, the first welded part 27 extends along the circumferential direction of the pore passage 2321 located at the inner circumferential side of the welded part, and the pore passage 2321 is configured for injecting electrolyte to the interior of the battery cell 20. Electrolyte can be injected into the battery cell 20 through the pore passage 2321.

The first welded part 27 may have a closed structure extending along the circumferential direction of the end cover 23, for example, the first welded part 27 is annular. The first welded part 27 may also have a non-closed structure extending along the circumferential direction of the end cover 23, for example, the first welded part 27 is divided into a plurality of segments, which are arranged at intervals along the circumferential direction of the end cover 23. For example, the first welded part 27 is annular, and the first welded part 27 may be coaxially formed with the pore passage 2321, so that the pore passage 2321 is located at the inner peripheral side of the first welded part 27.

In the case that both the first welded part 27 and the second welded part 28 extend along the circumferential direction of the end cover 23, and the second welded part 28 is located at the outer peripheral side of the first welded part 27, the second welded part 28, the first welded part 27 and the pore passage 2321 are sequentially arranged from outside to inside in the radial direction of the pore passage 2321. That is, the second welded part 28 is located at the outer peripheral side of the first welded part 27, and the first welded part 27 is located at the outer peripheral side of the pore passage 2321.

When electrolyte is injected to the interior of the battery cell 20 through the pore passage 2321, there may be residual electrolyte around the pore passage 2321 in the connecting part 232. If the welding position is close to the pore passage 2321 when welding the pressure relief mechanism 25 and the end cover 23, the welding between the pressure relief mechanism 25 and the end cover 23 is likely to be unstable under the influence of the residual electrolyte on the connecting part 232, resulting in a low welding yield. However, since the second welded part 28 is located at the outer peripheral side of the first welded part 27, the second welded part 28 is farther away from the pore passage 2321 than the first welded part 27, so that the welding position between the pressure relief mechanism 25 and the end cover 23 is far away from the pore passage 2321. When welding the pressure relief mechanism 25 and the end cover 23, it is not likely to be influenced by the residual electrolyte around the pore passage 2321, which ensures the firmness of the pressure relief mechanism 25 and the end cover 23 after welding, and improves the welding yield.

In some embodiments, please refer to FIG. 9, which is a structural schematic diagram of the current collecting member 24 shown in FIG. 6. The current collecting member 24 is formed with a first central hole 241 and a flow guiding channel 242 for electrolyte to enter the interior of the battery cell 20. The flow guiding channel 242 is arranged around the first central hole 241, and along the thickness direction Z of the end cover 23, the first central hole 241 and the pore passage 2321 are oppositely arranged.

The first central hole 241 is a through hole formed at the center of the current collecting member 24. For example, the current collecting member 24 has a disc structure, and the axis of the first central hole 241 coincides with the axis of the current collecting member 24. The first central hole 241 and the pore passage 2321 are oppositely arranged along the thickness direction Z of the end cover 23. The first central hole 241 may be coaxial with the pore passage 2321, or the axis of the first central hole 241 may be slightly deviated from the axis of the pore passage 2321. As long as the first central hole 241 and the pore passage 2321 are not completely staggered in the radial direction of the first central hole 241, it should be understood that the first central hole 241 and the pore passage 2321 are oppositely arranged along the thickness direction Z of the end cover 23.

The flow guiding channel 242 is a channel on the current collecting member 24 for conveying electrolyte, which is different from the first central hole 241. The flow guiding channel 242 may be independent from the first central hole 241, or may communicate with the first central hole 241. There may be one flow guiding channel 242 or a plurality of flow guiding channels 242. For example, there are a plurality of flow guiding channels 242, and the plurality of flow guiding channels 242 may be distributed around the first central hole 241.

Exemplarily, the electrode assembly 22 has a second central hole 223, and the first central hole 241 and the second central hole 223 are oppositely arranged along the thickness direction Z of the end cover 23. Taking the wound structure of the electrode assembly 22 formed by winding a positive pole piece, an isolating membrane and a negative pole piece as an example, a second central hole 223 is formed at the winding core position of the main part.

In this embodiment, since the first central hole 241 and the pore passage 2321 are oppositely arranged along the thickness direction Z of the end cover 23, and the flow guiding channel 242 is arranged around the first central hole 241, in the process of injecting electrolyte into the battery cell 20 through the pore passage 2321, the electrolyte can not only flow into the battery cell 20 along the first central hole 241, but also flow into the battery cell 20 along the flow guiding channel 242, thus improving the injection efficiency and making the electrolyte better soak the electrode assembly 22.

In some embodiments, continuing to refer to FIG. 9, the flow guiding channel 242 includes a flow guiding through hole, and the flow guiding through hole runs through two surfaces of the current collecting member 24 which are oppositely arranged along the thickness direction Z of the end cover 23; and/or, the guide channel 242 includes a flow guiding groove, and the flow guiding groove is formed on at least one surface of the current collecting member 24 in the thickness direction Z of the end cover 23.

The flow guiding groove is formed on at least one surface of the current collecting member 24 in the thickness direction Z of the end cover 23. Only the surface of the current collecting member 24 facing the electrode assembly 22 is formed with the flow guiding groove, or only the surface of the current collecting member 24 facing the end cover 23 is formed with the flow guiding groove, or both the surface of the current collecting member 24 facing the end cover 23 and the surface facing the electrode assembly 22 are formed with the flow guiding groove.

In this embodiment, if the flow guiding channel 242 is a flow guiding through hole running through both surfaces of the current collecting member 24 in the thickness direction Z of the end cover 23, the electrolyte entering through the pore passage 2321 can flow rapidly from the side of the current collecting member 24 facing the end cover 23 to the side facing away from the end cover 23 through the flow guiding through hole. If the flow guiding channel 242 is a flow guiding groove formed on the surface of the current collecting member 24, the electrolyte entering from the pore passage 2321 can flow laterally along the flow guiding groove, which is beneficial for the electrolyte to enter the electrode assembly 22 to soak the pole pieces.

An embodiment of the present disclosure provides a battery 100, which includes a case 10, and the battery cell 20 provided in any one of the above embodiments. The case 10 is configured for accommodating the battery cell 20.

An embodiment of the present disclosure provides an electrical apparatus, which includes the battery 100 provided in any one of the above embodiments.

In addition, referring to FIGS. 3 and 4, an embodiment of the present disclosure provides a cylindrical battery, which includes a housing 21, an electrode assembly 22, an end cover 23, a current collecting member 24 and a pressure relief mechanism 25. Openings are formed at opposite two ends of the housing 21, one end cover 23 covers the top opening of the housing 21, and the other end cover 23 covers the bottom opening of the housing 21. The end cover 23 at the top of the housing 21 is provided with an electrode terminal 26, and the electrode assembly 22 has a positive electrode tab 221 and a negative electrode tab 222. The positive electrode tab 221 is connected to the electrode terminal 26 through a current collecting member 24, and the negative electrode tab 222 is connected to the bottom opening of the housing 21 through another current collecting member 24.The pressure relief mechanism 25 is arranged at the end cover 23 at the bottom of the housing 21. The end cover 23 at the bottom of the housing 21 is provided with a concave 231 on the side facing away from the electrode assembly 22, and the concave 231 is configured for accommodating at least a portion of the pressure relief mechanism 25. A connecting part 232 is formed on the end cover 23 at the bottom of the housing 21 in the area where the concave 231 is provided, and the connecting part 232 is configured for being welded to the current collecting member 24 and form the first welded part 27. The pressure relief mechanism 25 covers the first welded part 27 along the thickness direction Z of the end cover 23.

In such a cylindrical battery, since the connecting part 232 is formed on the end cover 23 in the area where the concave 231 is provided, the connecting part 232 is welded to the current collecting member 24 to form the first welded part 27, and the pressure relief mechanism 25 covers the first welded part 27, so that the pressure relief mechanism 25 and the first welded part 27 are distributed in the thickness direction Z of the end cover 23, and the size of the pressure relief mechanism 25 in the thickness direction Z perpendicular to the end cover 23 is not limited by the first welded part 27. The size of the concave 231 and the pressure relief mechanism 25 can be enlarged as required, which is beneficial to improve the pressure relief capacity of the pressure relief mechanism 25 and the safety of the battery cell 20.

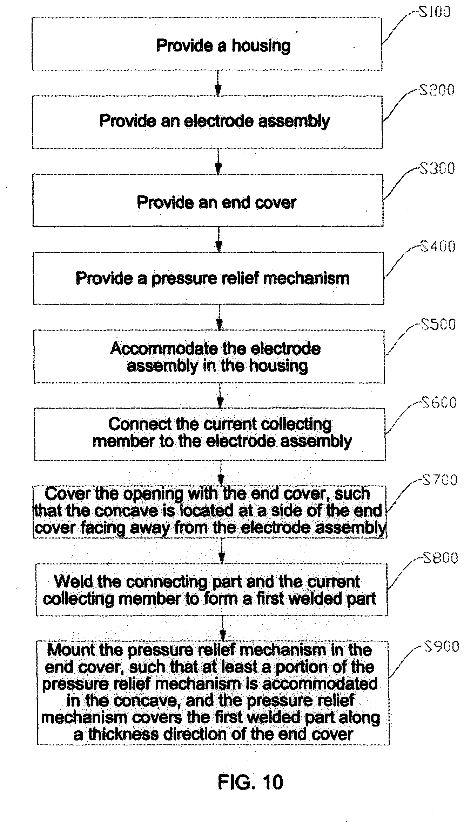

Please refer to FIG. 10, which is a flowchart of a method for manufacturing a battery cell 20 provided by some embodiments of the present disclosure. An embodiment of the present disclosure provides a method for manufacturing a battery cell 20, the method includes:
S100: providing a housing 21 with an opening;
S200: providing an electrode assembly 22;
S300: providing an end cover 23, wherein the end cover 23 is provided with a concave 231, and a connecting part 232 is formed on the end cover 23 in the area where the concave 231 is provided; and providing a current collecting member 24;
S400: providing a pressure relief mechanism 25, wherein the pressure relief mechanism 25 is configured to be actuated when the pressure or temperature inside the battery cell 20 reaches a threshold value to relieve the pressure inside the battery cell 20;
S500: accommodating the electrode assembly 22 in the housing 21;
S600: connecting the current collecting member 24 to the electrode assembly 22;
S700: covering the opening with the end cover 23, so that the concave 231 is located at the side of the end cover 23 facing away from the electrode assembly 22;
S800: welding the connecting part 232 with the current collecting member 24 to form the first welded part 27; and
S900: mounting the pressure relief mechanism 25 in the end cover 23, so that at least a portion of the pressure relief mechanism 25 is accommodated in the concave 231, and the pressure relief mechanism 25 covers the first welded part 27 along the thickness direction Z of the end cover 23.

In the above method, the sequence of step S100, step S200, step S300 and step S400 is not limited. For example, step S400 may be executed first, then step S300, then step S200, and then step S100.

It should be noted that the related structures of the battery cell 20 manufactured by the manufacturing method provided in the above embodiments can be referred to the battery cell 20 provided in the above embodiments, and will not be repeated here.

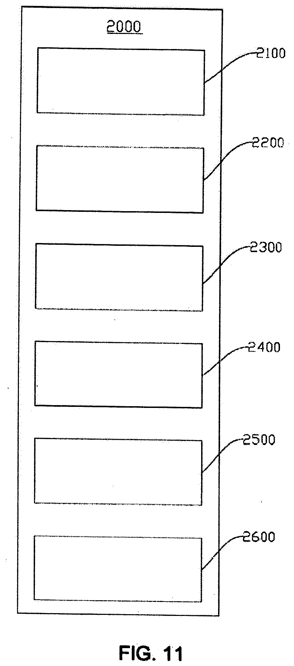

Please refer to FIG. 11, which is a schematic block diagram of an apparatus 2000 for manufacturing the battery cell 20 provided by some embodiments of the present disclosure. An embodiment of the present disclosure further provides an apparatus 2000 for manufacturing the battery cell 20. The apparatus 2000 includes a first providing device 2100, a second providing device 2200, a third providing device 2300, a fourth providing device 2400, a fifth providing device 2500 and an assembling device 2600.

The first providing device 2100 is configured for providing a housing 21 with an opening. The second providing device 2200 is configured for providing the electrode assembly 22. The third providing device 2300 is configured for providing the end cover 23, the end cover 23 is provided with a concave 231, and a connecting part 232 is formed on the end cover 23 in the area where the concave 231 is provided. The fourth providing device 2400 is configured for providing the current collecting member 24. The fifth providing device 2500 is configured for providing the pressure relief mechanism 25, and the pressure relief mechanism 25 is configured to be actuated when the pressure or temperature inside the battery cell 20 reaches a threshold value to relieve the pressure inside the battery cell 20. The assembling device 2600 is configured for accommodating the electrode assembly 22 in the housing 21. The assembling device 2600 is further configured for connecting the current collecting member 24 to the electrode assembly 22. The assembling device 2600 is further configured for covering the opening with the end cover 23, so that the concave 231 is located on the side of the end cover 23 facing away from the electrode assembly 22. The assembling device 2600 is further configured for welding the connecting part 232 with the current collecting member 24 to form the first welded part 27. The assembling device 2600 is further configured for mounting the pressure relief mechanism 25 in the end cover 23, so that at least a portion of the pressure relief mechanism 25 is accommodated in the concave 231, and the pressure relief mechanism 25 covers the first welded part 27 along the thickness direction Z of the end cover 23.

It should be noted that the related structures of the battery cell 20 manufactured by the manufacturing apparatus 2000 provided in the above embodiments can be referred to the battery cell 20 provided in the above embodiments, and will not be repeated here.

It should be noted that the embodiments in the present disclosure and the features in the embodiments may be combined with each other if not conflicted.

The above embodiments are only intended to illustrate the technical solutions of the present disclosure, and are not intended to limit the present disclosure. For those skilled in the art, various modifications and variations may be made to the embodiments of the present disclosure.

Any modification, equivalent replacement, improvement, etc. made within the spirit and principles of the present disclosure shall fall within the scope of protection of the present disclosure.

## Claims

1. A battery cell, comprising:
a housing, provided with an opening;
an electrode assembly, configured for being accommodated in the housing;
an end cover, configured for covering the opening;
a current collecting member, located at one side of the electrode assembly facing the end cover, wherein the current collecting member is configured for connecting the electrode assembly and the end cover, so as to realize an electrical connection between the electrode assembly and the end cover; and
a pressure relief mechanism, arranged on the end cover, wherein the pressure relief mechanism is configured to be actuated when a pressure or a temperature inside the battery cell reaches a threshold value, so as to relieve the pressure inside the battery cell.
wherein one side of the end cover facing away from the electrode assembly is provided with a concave, the concave is configured for accommodating at least a portion of the pressure relief mechanism, a connecting part is formed on the end cover in an area where the concave is provided, the connecting part is configured for being welded to the current collecting member to form a first welded part, and the pressure relief mechanism covers the first welded part along a thickness direction of the end cover.

2. The battery cell according to claim 1, wherein the pressure relief mechanism is welded to the end cover to form a second welded part, and a projection of the second welded part does not overlap with a projection of the first welded part along the thickness direction.

3. The battery cell according to claim 2, wherein both the first welded part and the second welded part extend along a circumferential direction of the end cover, and the second welded part is located at an outer peripheral side of the first welded part.

4. The battery cell according to claim 2, wherein second welded parts and first welded parts are alternately arranged along a circumferential direction of the end cover.

5. The battery cell according to any one of claims 1 to 4, wherein one side of the pressure relief mechanism facing the connecting part is formed with an avoidance groove for avoiding the first welded part.

6. The battery cell according to claim 5, wherein the pressure relief mechanism comprises:
a base, configured for being welded to the end cover to form a second welded part; and
a pressure relief part, configured to be actuated when the pressure or the temperature inside the battery cell reaches a threshold value, so as to relieve the pressure inside the battery cell, wherein the pressure relief part is connected to an inner peripheral surface of the base, the pressure relief part covers the first welded part along the thickness direction, and the pressure relief part and the base jointly define the avoidance groove.

7. The battery cell according to claim 6, wherein a thickness of the pressure relief part is smaller than a thickness of the base.

8. The battery cell according to claim 6 or 7, wherein the base is welded to the connecting part to form the second welded part, or an outer peripheral surface of the base is welded to an inner peripheral surface of the concave to form the second welded part.

9. The battery cell according to any one of claims 1 to 8, wherein the end cover comprises:
a cover body, configured for being connected to the housing, wherein the cover body has an outer surface and an inner surface which are oppositely arranged along the thickness direction, the inner surface faces the current collecting member, and the concave is concave from the outer surface in a direction facing the current collecting member; and
a convex, convexly arranged on the inner surface and located at a position of the cover body corresponding to the concave, wherein the convex is provided with an abutting surface for abutting against the current collecting member, and a portion of the end cover located between the abutting surface and a bottom surface of the concave is the connecting part.

10. The battery cell according to claim 9, wherein the bottom surface is closer to the current collecting member than the inner surface in the thickness direction, or the bottom surface is flush with the inner surface.

11. The battery cell according to any one of claims 1 to 10, wherein the pressure relief mechanism is integrally accommodated in the concave.

12. The battery cell according to any one of claims 1 to 11, wherein the connecting part is formed with a pore passage, and the pore passage runs through two surfaces of the connecting part which are oppositely arranged along the thickness direction, and the pressure relief mechanism covers the pore passage along the thickness direction.

13. The battery cell according to claim 12, wherein the first welded part extends along a circumferential direction of the pore passage, the pore passage is located at an inner peripheral side of the welded part, and the pore passage is configured for injecting electrolyte to an interior of the battery cell.

14. The battery cell according to claim 13, wherein the current collecting member is formed with a first central hole and a flow guiding channel for the electrolyte to enter the interior of the battery cell, the flow guiding channel is arranged around the first central hole, and the first central hole and the pore passage are oppositely arranged along the thickness direction.

15. The battery cell according to claim 14, wherein the flow guiding channel comprises a flow guiding through hole, the flow guiding through hole runs through two surfaces of the current collecting member which are oppositely arranged along the thickness direction; and/or
the flow guiding channel comprises a flow guiding groove, and the flow guiding groove is formed on at least one surface of the current collecting member in the thickness direction.

16. A battery, comprising:
the battery cell according to any one of claims 1 to 15; and
a case, configured for accommodating the battery cell.

17. An electrical apparatus, comprising the battery according to claim 16.

18. A method for manufacturing a battery cell, comprising:
providing a housing with an opening;
providing an electrode assembly;
providing an end cover, wherein the end cover is provided with a concave, and a connecting part is formed on the end cover in an area where the concave is provided;
providing a current collecting member;
providing a pressure relief mechanism, configured to be actuated when a pressure or a temperature inside the battery cell reaches a threshold value to relieve the pressure inside the battery cell;
accommodating the electrode assembly in the housing;
connecting the current collecting member to the electrode assembly;
covering the opening with the end cover, such that the concave is located at one side of the end cover facing away from the electrode assembly;
welding the connecting part and the current collecting member to form a first welded part; and
mounting the pressure relief mechanism in the end cover, such that at least a portion of the pressure relief mechanism is accommodated in the concave, and the pressure relief mechanism covers the first welded part along a thickness direction of the end cover.

19. An apparatus for manufacturing a battery cell, comprising:
a first providing device, configured for providing a housing with an opening;
a second providing device, configured for providing an electrode assembly;
a third providing device, configured for providing an end cover, wherein the end cover is provided with a concave, and a connecting part is formed on the end cover in an area where the concave is provided;
a fourth providing device, configured for providing a current collecting member;
a fifth providing device, configured for providing a pressure relief mechanism, wherein the pressure relief mechanism is configured to be actuated when a pressure or a temperature inside the battery cell reaches a threshold value to relieve the pressure inside the battery cell; and
an assembling device, configured for:
accommodating the electrode assembly in the housing;
connecting the current collecting member to the electrode assembly;
covering the opening with the end cover, such that the concave is located at one side of the end cover facing away from the electrode assembly;
welding the connecting part and the current collecting member to form a first welded part; and
mounting the pressure relief mechanism in the end cover, such that at least a portion of the pressure relief mechanism is accommodated in the concave, and the pressure relief mechanism covers the first welded part along a thickness direction of the end cover.
